# FASCICULE DE BREVET EUROPEEN

(11) **EP 3 556 193 B1**
(45) Date de publication et mention de la délivrance du brevet: **02.07.2025**
(21) Numéro de dépôt: 19169610.3
(22) Date de dépôt: 16.04.2019
(51) Int. Cl.: A01B 63/24, A01C 7/20, A01B 73/00

(54) **DISPOSITIF DE GLISSIÈRE SUR POUTRE EN H ET MACHINE AGRICOLE COMPORTANT UN TEL DISPOSITIF**
VORRICHTUNG ZUR VERSCHIEBUNG EINES ELEMENTS AUF EINEM H-PROFIL UND LANDWIRTSCHAFTLICHE MASCHINE MIT SOLCHER VORRICHTUNG
DEVICE SLIDING ON A H-BEAM AND AGRICULTURAL MACHINE COMPRISING SUCH DEVICE

(30) Priorité: 17.04.2018 FR 1853372
(43) Date de publication de la demande: 23.10.2019
(73) Titulaire: Kuhn SAS, 67700 Saverne (FR)
(72) Inventeur: AUDIGIE, Jean-Charles, 67330 Bouxwiller (FR)
(74) Mandataire: Hager, Esther Evelyne

(56) Documents cités:
- EP-A1- 2 030 495
- EP-A1- 3 228 170
- EP-A1- 3 235 362
- WO-A2-2008/024760
- DE-U1- 29 718 303
- US-A1- 2016 113 191

## Description

La présente invention se rapporte au domaine technique général du machinisme agricole et en particulier au domaine du travail du sol et/ou du semis.

L'invention porte plus particulièrement sur une structure d'accrochage d'outils sur une poutre de châssis d'une telle machine agricole.

On connait de l'état de la technique un châssis de semoir comportant une poutre télescopique en plusieurs sections de profil carré. La poutre télescopique comporte ici une section centrale dans laquelle une section latérale respective est insérée, coulissante, en chaque extrémité de la section centrale. La section centrale porte en ses extrémités des chariots support coulissants. Les chariots ont un corps principal, également de profil carré et prévu pour envelopper la section centrale de la poutre télescopique. Chaque chariot présente sur une face avant ainsi que sur une face arrière, une extension avant ou arrière respective, à profil trapézoïdal ou en queue d'aronde. Un élément semeur est fixé sur l'extension arrière de chaque chariot, tandis qu'un enfouisseur d'engrais est fixé sur l'extension avant. Les chariots sont déplaçables par coulissement sur la section centrale pour passer d'une configuration de travail dans lesquels les éléments semeurs sont espacés de la distance entre rangs dans le champ, à une configuration de transport dans laquelle le semoir doit répondre à des normes de largeur maximale sur route.

Le document WO 2008/024760 A2 décrit un semoir avec des outils dont l'espacement entre les rangs est réglable. Les outils sont montés sur une poutre via un chariot. Il n'est cependant pas possible que la structure d'accrochage puisse se translater depuis une première position vers une deuxième position sans relâcher le moyen de fixation.

Le document EP 3 228170 A1 concerne une structure d'accrochage d'outil à une poutre. Cette structure d'accrochage ne comporte pas de support destiné à porter un premier moyen d'appui. Par ailleurs, ce dernier ne présente qu'une seule surface de contact prévue pour venir en contact avec une surface d'appui respective de la poutre.

Le document US 2016/113191 A1 concerne un système de mélange de plusieurs produits agricoles à ratio variable destinés à être transportés au sein d'une machine agricole. Il n'est pas prévu dans ce document que les outils soient également espacés le long de la poutre.

Le document DE 297 18 303 U1 concerne un appareil agricole de culture en rang pour le travail simultané de plusieurs rangs d'une culture en rangs. Les outils sont montés sur une poutre au moyen de chariots respectifs. La position de l'outil sur la poutre est donnée via un moyen de fixation qu'il faut retirer avant de faire translater la structure d'accrochage vers une autre position.

L'invention vise à proposer une structure améliorée d'accrochage d'outils agricoles sur une poutre, tels qu'un élément semeur ou un enfouisseur, permettant un coulissement simple des outils agricoles afin de pouvoir ajuster leur écartement selon des conditions de travail souhaitées.

L'invention porte donc sur une structure d'accrochage d'outils sur une poutre de machine agricole, la structure d'accrochage étant définie par l'objet de la revendication 1.

L'orientation des surfaces de contact du moyen d'appui permet un centrage automatique et un meilleur équilibrage des outils agricoles (élément semeur, enfouisseur d'engrais,...) lors de leur fixation sur la poutre de châssis.

En outre, cette disposition à deux moyens d'appui permet d'une part de faire supporter une partie du poids par la partie inférieure de la poutre, d'autre part de rapprocher les moyens d'accrochage d'outils de la poutre. Cette structure d'accrochage par moyens d'appui préférentiellement prévus coulissants, directement sur la section de poutre de châssis, permet donc de réduire les contraintes de porte-à-faux que génèrent les outils sur la poutre, par exemple par rapport à une structure d'accrochage sur chariots comme dans l'art antérieur.

Par rapport au système à chariots de l'état de la technique, l'invention met en œuvre moins de matériau et moins de pièces, donc les coûts en matériau et en main d'œuvre d'assemblage sont réduits et le montage de la machine est simplifié.

Une telle structure d'accrochage peut par ailleurs être utilisée avec des éléments standards existants, prévus non coulissants.

Il en résulte une machine versatile, dans laquelle le passage d'un écartement entre rangs à un autre se fait de manière particulièrement simple. Dans le cas d'un semoir monograine, ce changement d'écartement est utile par exemple pour passer d'une culture à une autre, ou simplement pour une même culture en fonction de l'espace entre rangs de la machine qui récolte.

Cette structure d'accrochage présente l'avantage d'être utilisable pour tout outil ou toute paire d'outils standards, par exemple un élément semeur et un enfouisseur d'engrais. Par outils standards, il faut comprendre les outils déjà présents sur le marché, par exemple prévus pour être fixés sur la ou les sections de poutres de châssis, c'est-à-dire encore des outils qui ne sont pas prévus pour être coulissants en eux-mêmes.

L'invention permet de limiter l'étendue de la surface totale de contact entre les sections de poutre et les organes coulissants sur ces sections. Ceci permet de limiter l'effort mis en œuvre pour déplacer les organes coulissants sur le châssis. En outre, cette réduction de contact permet de bien compenser les défauts de planéité des surfaces en contact les unes contre les autres. En outre, la disposition des points de contact selon l'invention permet un guidage isostatique des outils agricoles sur la poutre en H.

Selon une caractéristique avantageuse, le deuxième moyen d'appui présente deux surfaces de contact chacune prévue pour venir en contact avec une surface d'appui respective de la poutre de machine agricole, la première surface de contact étant orientée selon un premier plan directeur, la deuxième surface de contact étant orientée selon un second plan directeur, le premier plan directeur étant sécant au deuxième plan directeur.

Selon une caractéristique avantageuse, le premier moyen d'appui est configuré pour être maintenu en position par rapport à l'au moins un support.

Selon une caractéristique avantageuse, le premier moyen d'appui comporte un premier moyen de maintien en position sur une face opposée aux deux surfaces de contact, l'au moins un support comportant un deuxième moyen de maintien en position, le premier et le deuxième moyens de maintien en position étant conformés à correspondance de forme, l'au moins un moyen d'appui étant configuré pour être maintenu en position par rapport au support respectif dans la configuration de travail par coopération directe ou indirecte du premier et du deuxième moyens de maintien en position.

Selon une caractéristique avantageuse, le premier moyen d'appui et le deuxième moyen d'appui sont opposés l'un à l'autre de part et d'autre de la poutre en configuration de travail, préférentiellement selon une relation haut-bas.

Selon une caractéristique avantageuse, la structure d'accrochage d'outils comporte un deuxième support et est configurée pour que l'au moins au support et le deuxième support soient opposés l'un à l'autre de part et d'autre de la poutre en configuration de travail, préférentiellement selon une relation haut-bas.

Selon une caractéristique avantageuse, le moyen d'accrochage d'outil comporte un crochet.

L'invention porte encore sur une machine agricole comportant une structure d'accrochage d'outils tel que décrit ci-dessus.

De préférence, la machine agricole comporte une poutre télescopique et au moins un outil agricole fixé sur la poutre télescopique au moyen d'un système de déplacement d'outils ayant une structure d'accrochage d'outils selon l'une des revendications précédentes.

Dans le cas d'une paire d'outils, tel qu'un enfouisseur d'engrais à l'avant et un élément semeur à l'arrière pour par exemple un semoir monograine équipé, la machine agricole permet d'ajuster l'espace entre rangs travaillés tout en conservant la distance entre le premier outil (par exemple l'élément semeur) et le deuxième outil (par exemple l'enfouisseur d'engrais respectif).

Selon une caractéristique avantageuse, la machine agricole comporte un moyen de réglage en position configuré pour former butée d'arrêt du coulissement latéral lors d'une manœuvre de déploiement de la machine agricole, le moyen de réglage en position étant déplaçable pour paramétrer l'écartement entre deux outils voisins que comporte la machine agricole.

Selon une caractéristique avantageuse, les plans directeurs des surfaces de contact d'au moins un des moyens d'appui sont convergentes en direction de la poutre télescopique dans la configuration de travail.

Selon une caractéristique avantageuse, la poutre télescopique comporte deux surfaces d'appui convergentes correspondant respectivement aux deux surfaces de contact de l'au moins un des moyens d'appui.

Selon une caractéristique avantageuse, dans la machine agricole, au moins un moyen d'accrochage d'outil est un moyen arrière d'accrochage d'outil, et appartient préférentiellement à un mécanisme déformable d'un outil agricole arrière.

Selon une caractéristique avantageuse, un premier outil agricole que porte la machine est un élément semeur.

Selon une caractéristique avantageuse la machine comporte un deuxième outil agricole qui est préférentiellement un outil agricole avant et/ou un dispositif d'enfouissement d'engrais.

Selon une caractéristique avantageuse, la structure d'accrochage admet une deuxième configuration de travail dans laquelle la structure d'accrochage d'outils est également configurée pour être fixée sur ladite poutre de machine agricole par le moyen de fixation.

Selon une caractéristique de l'invention, la structure d'accrochage est configurée pour pouvoir subir une translation par rapport à la poutre depuis une première position vers une deuxième position, sans que le ou les moyen(s) de fixation ait(aient) à atteindre un état relâché, la première position correspondant à la première configuration de travail, la deuxième position correspondant à une deuxième configuration de travail. Il est alors possible de changer facilement d'écartement entre les rangs travaillés, par exemple pour changer de culture ou simplement adapter l'écartement aux conditions agronomiques pour une même culture.

Selon une caractéristique avantageuse, deux structures d'accrochage d'outils portant chacune un outil sont montées sur une section centrale de la poutre.

D'autres caractéristiques et avantages de l'invention se dégageront des exemples de réalisation non limitatifs de l'invention qui vont suivre et des dessins annexés dans lesquels :
- les figures 1 et 2 sont des vues en perspective d'une poutre de châssis télescopique de machine agricole ;
- la figure 3 est une vue en section d'une structure d'accrochage d'outils, ici un outil agricole avant et un outil agricole arrière, sur une poutre à double profil trapézoïdal, ainsi que d'éléments supports appartenant aux deux outils agricoles ;
- la figure 4 est une vue en perspective des éléments de la figure 3 ;
- la figure 5 est une vue en perspective des éléments de la structure d'accrochage d'outils sans outil agricole avant ;
- la figure 6 est un schéma éclaté en vue de profil de différents éléments de la structure d'accrochage d'outils.

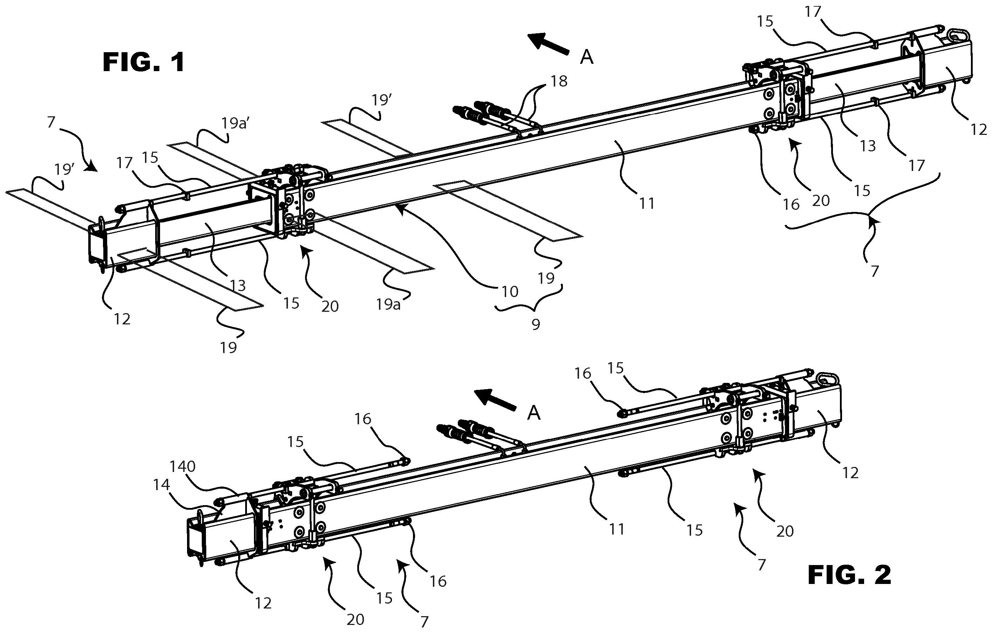

Les figures 1 et 2 illustrent une poutre télescopique 10 de châssis télescopique de machine agricole 9. La poutre télescopique 10 s'étend transversalement à une direction d'avance A de la machine. La machine agricole 9 porte ici des outils agricoles arrière 19 et 19a, et des outils agricoles avant 19' et 19a'. En variante non illustrée, les outils arrière 19 peuvent être prévus sans outils avant 19'.

Dans la présente description, les termes relatifs à une orientation des pièces sont à comprendre en référence à la position de la machine en configuration de travail, par exemple lorsqu'elle est attelée à un tracteur, et selon la direction d'avance A de la machine agricole 9. Des exemples de tels termes sont : supérieur et inférieur, avant et arrière, vertical et horizontal.

La machine agricole 9 est ici un semoir monograine à six rangs. Les outils arrière 19 sont ici des éléments semeurs 19. Les outils avant 19' sont ici des enfouisseurs d'engrais. Dans le mode de réalisation illustré, à chaque outil arrière 19 correspond un outil avant 19', l'outil avant 19' étant légèrement décalé vers le côté par rapport à l'outil arrière 19 correspondant selon la direction d'avance A. Ce décalage permet dans le cas présent d'implanter l'engrais à une courte distance du sillon d'implantation de graines (non représentés).

La poutre 10 comporte une section centrale 11, deux sections latérales 12 et deux sections intermédiaires 13. Les sections latérales 12 sont montées en une extrémité respective de la section centrale 11 par une section intermédiaire 13. Plus précisément, les sections latérales 12 sont ici fixées chacune sur une section intermédiaire 13 respective, les sections intermédiaires 13 étant chacune montée coulissante dans la section centrale 11.

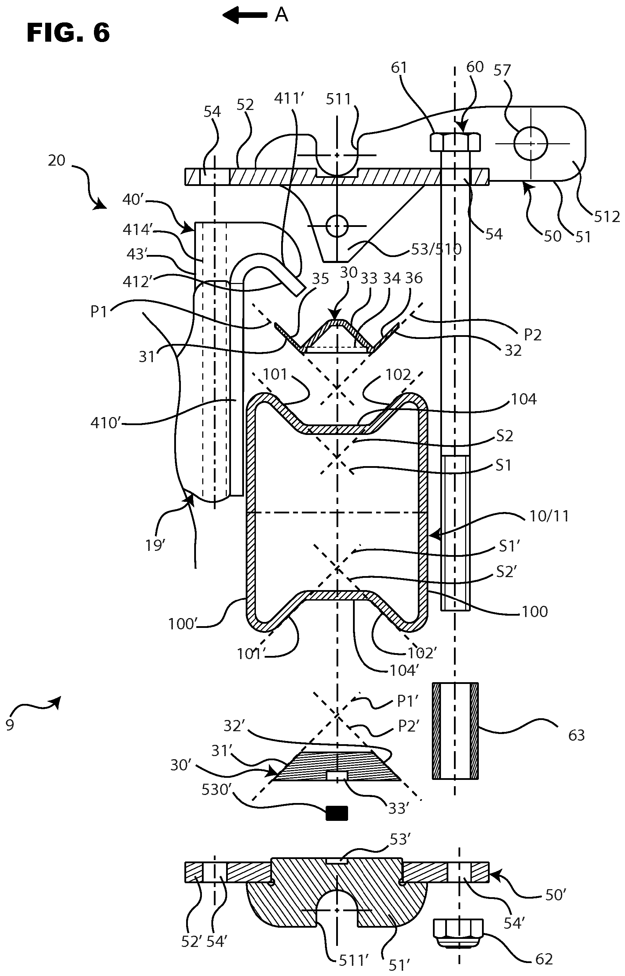

La section centrale 11 et les sections latérales 12 ont ici un profil identique en H, c'est-à-dire présentant une section plus large en leurs faces verticales parallèles avant 100 et arrière 100' qu'au niveau de parties médianes supérieure 104 et inférieure 104' situées entre ces deux faces 100 et 100'. Les faces verticales 100 et 100' sont chacune reliées à la partie médiane supérieure 104 par des surfaces inclinées 101 et 102 et à la partie médiane inférieure 104' par des surfaces inclinées 101' et 102'. Les surfaces inclinées 101 et 102 (respectivement 101' et 102') sont ici planes et orientées selon des plans directeurs S1 et S2 sécants (respectivement S1' et S2'). Les surfaces inclinées 101 et 102 (respectivement 101' et 102') sont donc situées de part et d'autre d'un plan vertical traversant la poutre 10 en son milieu et dans sa longueur (figure 6). Les plans directeurs S1 et S2 (respectivement S1' et S2') sont ici orientés vers l'intérieur de la poutre 10. Les sections 11 présentent ainsi un profil à deux portions trapézoïdales (ou en queue d'aronde) : l'une à l'avant, l'autre à l'arrière.

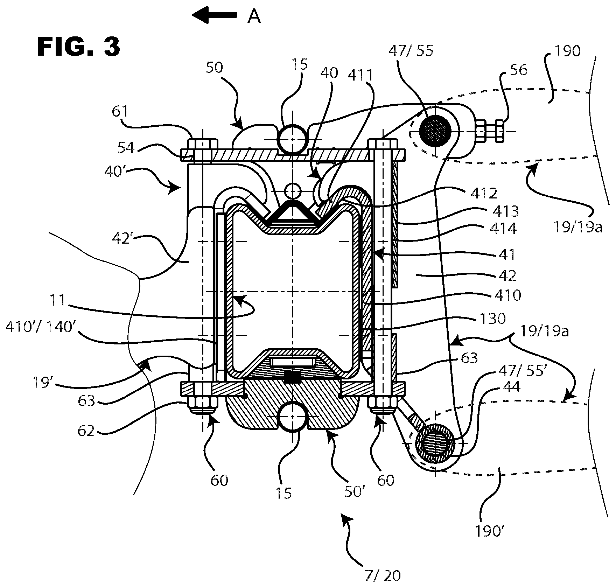

Les sections latérales 12 présentent chacune deux flasques de fixation 14 pour le maintien de tringles de guidage 15 de structures d'accrochages d'outils 20 (figures 1 et 2). Les flasques de fixation 14 sont ici orientés dans la direction générale des sections latérales 12 et s'étendent respectivement vers le haut et vers le bas, depuis les parties médianes 104 et 104' des sections latérales 12 (figure 3). Les flasques de fixation 14 présentent ici en leur extrémité libre un moyen de retenue 140 des tringles de guidage 15. Les moyens de retenue 140 sont ici sous forme d'un fourreau. Les fourreaux 140 accueillent et maintiennent chacun une extrémité des tringles de guidage 15.

La poutre télescopique 10 comporte encore un système de déplacement d'outils 7 comportant ici deux structures d'accrochage d'outils agricoles 20, des tringles de guidage 15, des butées de déploiement 16 et des butées de rétractation 17 (figures 1 et 2).

Les structures d'accrochage d'outils 20 sont montées coulissantes chacune sur une extrémité respective de la section centrale 11. Les structures d'accrochage d'outils 20 seront décrites en détail plus loin en référence aux figures 3 à 6.

Des moyens d'alimentation 18 sont ici prévus sur la machine 9, par exemple depuis un tracteur auquel est attelé la machine agricole 9. Des moyens d'entrainement non illustrés permettent de gouverner le coulissement des structures d'accrochage d'outils 20 sur la poutre 10. Les moyens d'alimentation peuvent être des conduits hydrauliques pour des vérins hydrauliques correspondants, par exemple installés dans la poutre 10. Les moyens d'alimentation peuvent encore être des câbles électriques si les moyens d'entrainement sont des vérins électriques. En variante encore, les moyens d'entrainement peuvent comporter au moins une vis sans fin ou un système de blocage à levier, apte à permettre le coulissement d'au moins une structure d'accrochage d'outils 20 le long de la poutre 10.

Dans le mode de réalisation représenté, un outil arrière 19 et un outil avant 19' sont montés sur chaque structure d'accrochage d'outils 20. Ces outils arrière 19 et avant 19' particuliers sont appelés coulissants 19a et 19a'. Des outils 19, 19', 19a et 19a' sont schématisés à titre d'exemple de positionnement en figure 1. Très préférentiellement, mais non limitativement, les éléments semeurs coulissants 19a sont identiques aux éléments semeurs 19. En effet, les structures d'accrochage d'outils 20 permettent l'accrochage d'outils 19 et 19' standards, c'est-à-dire d'outils pouvant être prévus pour être accrochés directement sur la poutre 10. L'ensemble des éléments semeurs 19 et 19a d'une part, et/ou l'ensemble des enfouisseurs d'engrais 19' et 19a' d'autre part (ou plus généralement chaque ensemble d'outils arrière ou d'outils avant) peuvent donc être constitués d'outils identiques, au bénéfice de la simplicité de montage et d'une réduction du coût de la machine 9. Sur un semoir monograine à six rangs dont la poutre télescopique fait l'objet de l'exemple illustré en figures 1 et 2, les éléments semeurs coulissants 19a sont les deuxième et cinquième éléments semeurs d'un côté à l'autre du semoir. Dans le mode de réalisation illustré, les outils arrière 19 et 19a comportent chacun un mécanisme déformable, de type parallélogramme, pourvu d'un bras supérieur 190 et d'un bras inférieur 190' (figure 3).

Le système de déplacement d'outils 7 a pour rôle d'assurer le déplacement des éléments coulissants 19a et de garantir leur écartement à une distance souhaitée sur la poutre télescopique 10.

Les tringles de guidage 15 sont ici au nombre de deux : l'une en-dessous, l'autre au-dessus des sections 11 à 13 de la poutre 10. Les tringles de guidage 15 assurent un guidage en translation des structures d'accrochage d'outils 20 et évitent l'apparition d'éventuelles forces de cisaillement pouvant bloquer leur coulissement sur la section centrale 11.

Les tringles de guidage 15 s'étendent ici au-dessus et en-dessous de la poutre 10, parallèlement à la direction longitudinale de la poutre télescopique 10. Les tringles de guidage 15 sont ici montées coulissantes sur les structures d'accrochage 20. Les tringles de guidage 15 sont aussi montées fixes sur les sections latérales 12, dans les fourreaux 140. Chaque tringle 15 est pourvue d'une butée de déploiement 16 et d'une butée de rétractation 17. Les butées 16 et 17 sont chacune prévues pour former élément d'arrêt des structures d'accrochage d'outils 20 lors d'opérations de translation de ces structures d'accrochage d'outils 20. Les butées 16 et 17 limitent le coulissement des structures 20 lors du passage de la configuration de transport à la configuration de travail, respectivement l'inverse.

Les butées de déploiement 16 sont disposées sur les tringles 15 à des emplacements appropriés pour entrer en contact avec les structures d'accrochage d'outils 20 lors des opérations de déploiement. Les butées de déploiement 16 permettent de positionner les deux structures d'accrochage d'outils 20 et les éléments semeurs coulissants 19a en une position de travail respective souhaitée. Afin de pouvoir changer l'espacement entre les rangs, les butées de déploiement 16 peuvent chacune adopter différentes positions sur les tringles 15. A cet effet, différents moyens d'indexation peuvent être prévus, par exemple mais non limitativement un système de boulonnage propre à chaque butée 16. Les butées de déploiement 16 sont déplaçables pour permettre de faire varier l'écartement entre deux outils voisins 19, 19a, 19' ou 19a'. Le semoir 9 pourvu d'une poutre télescopique telle que la poutre 10, de butées de déploiement 16 et de moyens d'indexation correspondants, est désigné sous le nom de semoir télescopique indexable.

Les butées de rétractation 17 sont disposées sur les tringles 15 à des emplacements appropriés pour entrer en contact avec les structures d'accrochage d'outils 20 lors des opérations de rétractation. Les butées de rétractation 17 permettent de positionner les structures d'accrochage d'outils 20 et les éléments semeurs coulissants 19a en une position de transport respective souhaitée. Ce positionnement évite que les éléments semeurs coulissants 19a n'entrent en collision avec les éléments semeurs 19 montés sur les sections latérales 12 lorsque la structure est rétractée. Les butées de rétractation 17 peuvent être prévues déplaçables de manière analogue aux butées de déploiement 16.

Les structures d'accrochage d'outils 20 comportent ici chacune deux moyens d'appui 30 et 30', deux moyens d'accrochage d'outil 40 et 40', deux supports 50 et 50' et des moyens de fixation 60.

Les structures d'accrochage d'outils 20 admettent chacune une configuration de travail dans laquelle elles sont montées sur la section centrale 11 par les moyens de fixation 60, c'est-à-dire resserrées ou maintenues autour de la section centrale 11.

Les moyens d'appui 30 et 30' sont des patins coulissants, par exemple en matière plastique ou en composite à base de résine. Plus généralement, les moyens d'appui 30 et 30' peuvent être en un matériau à coefficient de friction avec l'acier inférieur au coefficient de friction acier-acier.

Ici, le premier moyen d'appui 30 est un patin supérieur, tandis que le deuxième moyen d'appui 30' est un patin inférieur.

Le support 50 est ici un support supérieur, tandis que le support 50' est un support inférieur. Les supports 50 et 50' ont pour rôle de maintenir et de plaquer les moyens d'appui 30 et 30' contre la section centrale 11 en configuration de travail.

Les moyens d'accrochage d'outil 40 et 40' forment la partie avant des outils arrière 19 et avant 19' et les moyens d'accrochage d'outil 40 et 40' en permettent la fixation sur la poutre 10.

Le patin supérieur 30 présente deux surfaces de contact 31 et 32 prévues chacune pour venir en contact avec une surface d'appui supérieure 101 et 102 respective de la poutre télescopique 10, ici plus précisément de la section centrale 11. La première surface de contact 31 est orientée selon un premier plan directeur P1, la deuxième surface de contact 32 est orientée selon un deuxième plan directeur P2. Le premier plan directeur P1 est sécant au deuxième plan directeur P2.

Le patin inférieur 30' présente deux surfaces de contact 31' et 32' prévues chacune pour venir en contact avec une surface d'appui inférieure 101' et 102' respective de la poutre télescopique 10. La première surface de contact 31' est orientée selon un premier plan directeur P1', la deuxième surface de contact 32' est orientée selon un deuxième plan directeur P2'. Le premier plan directeur P1' est sécant au deuxième plan directeur P2'.

Les plans directeurs P1 et P2 d'une part, et P1' et P2' d'autre part, sont ici disposés convergents par paire vers l'intérieur de la poutre télescopique 10 lorsque les structures d'accrochage d'outils 20 sont montées sur la machine. Autrement dit, pour un même patin coulissant 30 (respectivement 30'), les surfaces de contact 31 et 32 (respectivement 31' et 32') sont sensiblement opposées l'une à l'autre, c'est-à-dire qu'elles ne se font pas face. Les surfaces de contact 31 et 32 (respectivement 31' et 32') sont donc situées de part et d'autre d'un plan vertical médian traversant le moyen d'appui 30 (respectivement 30') en vue de profil (figure 6). Ce plan vertical médian traversant le moyen d'appui 30 (respectivement 30') en vue de profil et le plan vertical traversant la poutre 10 en son milieu et dans sa longueur (figure 6) sont confondus. On retrouve ainsi une configuration symétrique avant/arrière (par rapport à la direction d'avance A de la machine) des surfaces de contact 31 et 32 (respectivement 31' et 32') et donc des surfaces d'appui 101 et 102 (respectivement 101' et 102') de la poutre 10. Cette configuration présente comme avantages un centrage automatique des moyens d'appui (30, 30') sur la poutre (10) ainsi qu'un meilleur équilibrage des outils agricoles (19,19').

Le moyen d'appui 30 (respectivement 30') comporte deux surfaces d'appui : une surface d'appui avant 35 et une surface d'appui arrière 36. Les surfaces d'appui 35 et 36 sont respectivement opposées aux surfaces de contact 31 et 32.

Le moyen d'appui 30 (respectivement 30') comporte un premier moyen de maintien en position 33 ménagé sur une face 34 (respectivement 33' et 34') opposée aux deux surfaces de contact 31 et 32 (respectivement 31' et 32'). Le support 50 (respectivement 50') comporte ici un deuxième moyen de maintien en position 53 (respectivement 53').

Les premier et le deuxième moyens de maintien en position 33 et 53 du support supérieur 50 sont conformés à correspondance de forme. Le moyen d'appui 30 est configuré pour être maintenu en position par rapport au support 50 dans la configuration de travail par coopération des premier et deuxième moyens de maintien en position 33 et 53.

Le premier moyen de maintien en position 33 est une saillie à faces latérales planes et le deuxième moyen de maintien en position 53 est formé par l'extrémité inférieure 510 de chacun des deux flasques 51 latéraux du support 50. Le deuxième moyen de maintien en position 53 s'étend ainsi ici de part et d'autre du premier moyen de maintien en position 33.

Ici, les premier et le deuxième moyens de maintien en position 33' et 53' du support inférieur 50' sont des évidements de section rectangulaire. Ces moyens de maintien 33' et 53' sont conformés à correspondance de forme avec un troisième moyen de maintien en position 530', par exemple une clavette (figure 6).

Les premier et le deuxième moyens de maintien en position 33 et 53 (respectivement 33' et 53') peuvent se présenter sous différentes autres formes, par exemple être respectivement un logement et une saillie, ou encore différentes saillies de part et d'autre et à correspondance de forme.

Le support supérieur 50 (respectivement le support inférieur 50') comporte ici deux premiers flasques 51 (respectivement 51') et un deuxième flasque 52 (respectivement 52'), voir figure 6. En configuration de travail de la machine 9, les premiers flasques 51 (respectivement 51') sont ici des flasques verticaux, et le deuxième flasque 52 (respectivement 52') est ici un flasque horizontal.

Le flasque horizontal 52 (respectivement 52') est fixé entre les deux flasques verticaux 51 (respectivement 51'). Les flasques verticaux 51 présentent un évidement 511 (respectivement 511').

Les évidements 511 ou 511' d'un même support 50 ou 50' sont ici destinés à loger une tringle de guidage 15. Les butées 16 et 17 viennent alors en contact avec les flasques verticaux 51 et 51' lors des manœuvres de déploiement et de rétractation de la machine 9.

Des orifices traversants 54 (respectivement 54') sont ici aménagés dans à travers le flasque horizontal 52 (respectivement 52'). Le flasque 52 (respectivement 52') présente ici deux orifices 54 (respectivement 54') en sa partie avant et un orifice 54 (respectivement 54') en sa partie arrière. Les orifices 54 et 54' sont destinés à servir de logement aux moyens de fixations 60.

Chaque flasque vertical 51 comporte en outre une extrémité inférieure 510 et ici une extrémité arrière 512. Comme indiqué précédemment, les extrémités inférieures 510 forment ici ensemble le deuxième moyen de maintien en position 53 tel que décrit plus haut.

L'extrémité arrière 512 s'étend non limitativement au-delà de l'extrémité arrière du flasque horizontal 52. Un orifice traversant 57 est aménagé dans l'épaisseur de chaque flasque vertical 51 à travers l'extrémité arrière 512. L'orifice traversant 57 est destiné à recevoir une tige de fixation 55 d'axe 550 sur lequel un bras supérieur 190 de l'outil avant coulissant 19a' est monté pivotant (figure 3).

Le moyen d'accrochage d'outil 40 comporte un crochet 41, voir figure 3. Le moyen d'accrochage d'outil 40' comporte aussi un crochet 41', lequel est analogue, voire de préférence de structure identique, au crochet 41.

Le moyen d'accrochage d'outil 40 comporte en outre deux montants 42. Le moyen d'accrochage d'outil 40' comporte en outre un bras 42' ayant ici deux flasques parallèles 420' supportant l'outil d'enfouissement d'engrais (non représenté).

Le crochet 41 (respectivement 41') comporte une portion verticale 410 (respectivement 410') et une portion d'accrochage 411 (respectivement 411'). La portion d'accrochage 411 (respectivement 411') s'étend transversalement à la portion verticale 410 (respectivement 410'), et est ici inclinée vers l'avant et vers le bas en configuration de travail (respectivement vers l'arrière et vers le bas). La portion d'accrochage 411 (respectivement 411') présente une surface inférieure 412 (respectivement 412'), dite surface d'accrochage, configurée pour reposer en configuration de travail sur une surface d'appui 36 (respectivement 35) du patin supérieur 30.

Les deux montants 42 (respectivement les flasques 420') sont ici des flasques plats, sensiblement verticaux en configuration de travail de la machine. Deux orifices traversants 47 sont ménagés dans l'épaisseur de chacun des montants 42, l'un en partie haute et l'autre en partie basse. Les orifices 47 sont ici destinés à loger une tige de fixation basse 55' d'axe 550' sur laquelle un bras inférieur 190' de l'outil arrière coulissant 19a' est monté pivotant (figure 3).

Les montants 42 (respectivement les flasques 420') et le crochet 41 (respectivement 41') sont solidaires entre eux, les montants 42 (respectivement les flasques 420') étant par exemple chacun soudé au crochet 41 (respectivement 41').

Un renfort vertical 413 est ici également soudé au crochet 41. Le renfort 413 peut être par exemple soudé à chacun des montants 42 pour assurer une bonne rigidité au moyen d'accrochage d'outil 40.

Un orifice vertical 414 (respectivement 414') est ici prévu dans un fourreau 43 (respectivement 43') pour loger la tige 64 d'une vis 61 du moyen de fixation arrière 60, voir figure 3 (respectivement figure 6).

Les moyens de fixation 60 prennent ici la forme d'un système de boulonnage, et comportent chacun : une vis 61, un écrou 62 et une entretoise 63.

Les moyens de fixation 60 ont pour rôle de pincer les supports 50 et 50' contre la poutre télescopique 10, ici contre sa section centrale 11. La tête de la vis 61 et l'écrou 62 peuvent venir directement au contact des flasques horizontaux 52 et 52', ou par l'intermédiaire de rondelles.

Dans le détail, les vis 61 sont insérées de bas en haut dans un orifice 54 du support supérieur 50, dans un orifice 414 du moyen d'accrochage d'outil 40 et dans un orifice 54' du support inférieur 50'.

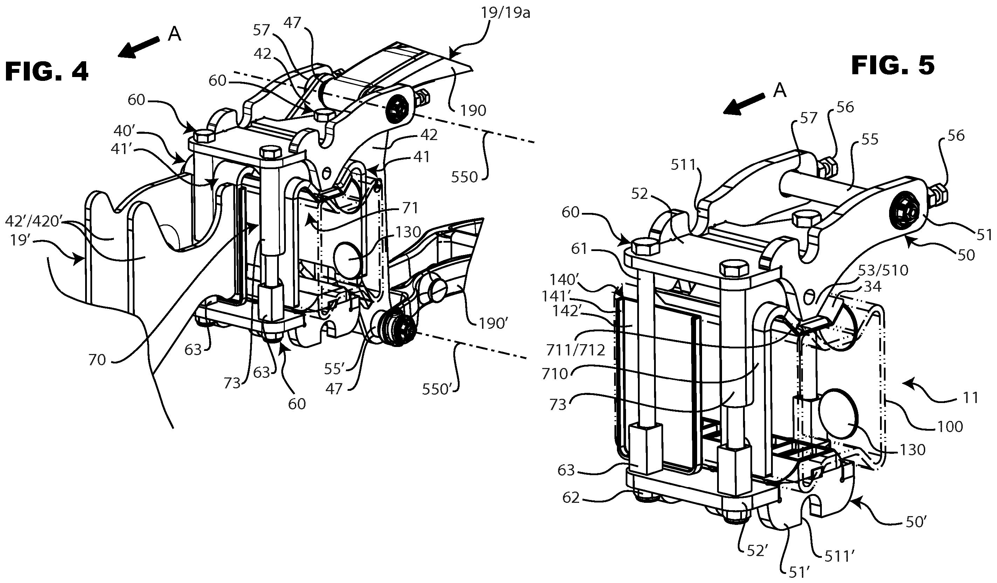

Pour assurer une bonne stabilité des structures d'accrochage d'outils 20, au moins un moyen de stabilisation 70 peut être prévu à la place d'un moyen d'accrochage d'outil 40 ou 40', notamment ici en partie avant de la structure 20, voir figures 4 et 5.

Le moyen de stabilisation 70 comporte un crochet 71 de structure analogue aux crochets 41 et 41' : une portion verticale 710 et une portion d'accrochage 711 inclinée par rapport à la portion verticale 710. De même, la portion d'accrochage 711 présente une surface inférieure 712, dite surface d'accrochage, configurée pour reposer en configuration de travail sur une surface d'appui 35 du patin supérieur 30.

Dans le mode de réalisation illustré (figures 4 et 5), un moyen de stabilisation 70 est monté voisin du crochet 41' de l'outil avant 19'. Un moyen de fixation 60 traverse le moyen de stabilisation 70 de bas en haut, de manière analogue au moyen de fixation 60 qui traverse le crochet 41'. Un orifice vertical est par exemple prévu dans un fourreau 73 pour loger la tige 64 d'une vis 61 du moyen de fixation arrière 60, voir figure 5. Dans une variante non illustrée, l'outil avant 19' est absent et substitué par un deuxième moyen de stabilisation 70.

Dans le semoir 9 illustré, des moyens d'appui 130 et 140' sont prévus pour assurer un contact sensiblement plan entre les moyens d'accrochage 40 et 40', et la section centrale 11. Les matériaux dans lesquels les moyens d'appui 130 et 140' sont fabriqués sont choisis à faible coefficient de friction pour permettre un coulissement sans effort des structures d'accrochage d'outils 20 sur la section centrale 11.

Les moyens d'appui 130 sont ici quatre patins individuels et de forme circulaire. Les patins 130 sont disposés à distance les uns des autres, dans les coins latéraux, inférieurs et supérieurs de la portion verticale 410. Une telle structure de moyens d'appui 130 permet d'assurer un contact stable entre l'outil arrière 19a et la section centrale 11, ici sur sa face arrière 100, tout en permettant un coulissement à friction minimale entre ceux-ci.

Le moyen d'appui 140' est un patin de forme sensiblement rectangulaire. Le patin 140', et plus précisément sa portion de contact 142', forme interface de contact entre la portion verticale 410' et la section centrale 11. Un rebord 141', enveloppant la portion de contact 142' sur ses côtés latéraux et inférieur, permet au patin 140' d'être maintenu en position par rapport à la portion verticale 410'. En configuration de travail, le patin 140' est prévu pour reposer à plat contre la section centrale 11, ici sur sa face avant 100'.

Dans leur ensemble, les moyens d'appui 30, 30', 130 et 140' du mode de réalisation illustré permettent de limiter les surfaces de friction au maximum et offrent ainsi un coulissement idéal.

L'entretoise 63 a pour rôle de limiter les jeux d'une part entre les moyens d'accrochage d'outil 40 et 40' et la section centrale 11, d'autre part entre le(s) crochet(s) de stabilisation 70 et la section centrale 11.

Les structures d'accrochage d'outils 20 comportent préférentiellement des moyens de réglage 56 permettant le positionnement des outils arrière 19a par pivotement autour de l'axe 550' de la tige inférieure 55' (figure 3). Les moyens de réglage 56 sont préférentiellement montés sur l'extrémité arrière 512 qu'ils traversent pour déboucher dans les orifices 57. Les moyens de réglage 56 comportent ici une vis de serrage.

En variante non illustrée, les moyens d'accrochage d'outils 40 et 40' peuvent varier et comporter par exemple un crochet inférieur analogue aux crochets 41 et 41'.

En variantes non illustrées, la machine agricole 9 peut ne comporter qu'un ensemble d'outils arrière 19 et 19a, ou qu'un ensemble d'outils avant 19' et 19a'.

En variante non illustrée, les sections 11 et 12 de la machine agricole ont une section différente de la section à deux queues d'aronde décrite ci-dessus. Les sections 11 et 12 peuvent ne comporter qu'une seule surface d'appui inclinée, l'autre étant sensiblement verticale en configuration de travail de la machine 9, par exemple la surface avant. Dans ce cas, les sections 11 et/ou 12 ne comportent qu'un profil à queue d'aronde. En variante, seule la partie haute ou la partie basse présente une surface d'appui inclinée, l'autre pouvant avoir deux surfaces inclinées, ou l'une inclinée et l'autre à angle droit, ou être plate. Dans les variantes énumérées au présent paragraphe, le profil de la poutre 10 est généralement appelé profil en H, et la poutre 10 est appelée « poutre en H ». La ou les surface(s) inclinée(s) permet néanmoins, grâce au serrage des moyens d'appui contre la poutre 10, le positionnement avant-arrière souhaité.

En variantes non illustrées, la machine agricole est un semoir d'un autre type, tel qu'un semoir à céréales, une machine d'enfouissement d'engrais, etc.

Grâce aux contacts limités, notamment quasi-ponctuels 130 et 140' sur les faces planes 100 et 100' de la poutre 10, et à l'absence de contact sur les parties médianes 104 et 104', il n'est avantageusement pas nécessaire de relâcher ou desserrer les moyens de fixation 60 pour permettre un coulissement aisé des structures d'accrochage d'outils 20 sur la section centrale 11.

En variante non illustrée, le nombre de structures d'accrochage d'outils 20 est prévu différent de deux, par exemple un, trois, quatre ou plus de quatre.

## Revendications

1. Structure d'accrochage d'outils configurée pour être montée sur une poutre (10) de machine agricole (9), comportant :
- un premier moyen d'appui (30 ; 30') et un deuxième moyen d'appui (30' ; 30),
- au moins un moyen d'accrochage d'outil (40, 40'),
- au moins un support (50, 50') destiné à porter le premier moyen d'appui (30 ; 30'),
- au moins un moyen de fixation (60) destiné à permettre le maintien du premier moyen d'appui (30 ; 30') et du deuxième moyen d'appui (30' ; 30) contre la poutre (10),
la structure d'accrochage d'outils (20) admettant une configuration de travail dans laquelle la structure d'accrochage d'outils (20) est configurée pour être montée sur ladite poutre (10) par le moyen de fixation (60), la structure d'accrochage est configurée pour pouvoir subir une translation par rapport à la poutre (10) depuis une première position vers une deuxième position, sans que le ou les moyen(s) de fixation ait(aient) à atteindre un état relâché, la première position correspondant à la première configuration de travail, la deuxième position correspondant à une deuxième configuration de travail, via des contacts limités (130 : 140') sur des faces planes (100 ; 100') de la poutre (10) et à l'absence de contact sur des parties médianes (104 ;104'), dans laquelle le premier moyen d'appui (30 ; 30') présente deux surfaces de contact (31, 32 ; 31', 32') chacune prévue pour venir en contact avec une surface d'appui (101, 102 ; 101', 102') respective de la poutre (10) de machine agricole, la première surface de contact (31) du premier moyen d'appui (30 ; 30') étant orientée selon un premier plan directeur (P1 ; P1'), la deuxième surface de contact (32) du premier moyen d'appui (30 ; 30') étant orientée selon un second plan directeur (P2 ; P2'), le premier plan directeur (P1 ; P1') étant sécant au deuxième plan directeur (P2 ; P2'), et une surface d'accrochage (412 ; 412') de l'au moins un moyen d'accrochage d'outil (40, 40') est configurée pour venir en prise contre une surface d'appui (35 ; 36) du premier moyen d'appui, la surface d'appui (35 ; 36) étant opposée à la surface de contact (31, 32 ; 31', 32') de l'au moins un moyen d'appui (30 ; 30') dans une configuration de travail de la structure d'accrochage d'outils (20),
structure **caractérisée en ce que** les contacts limités sont quasi-ponctuels.

2. Structure d'accrochage d'outils selon la revendication précédente, le deuxième moyen d'appui (30' ; 30) présentant deux surfaces de contact (31, 32 ; 31', 32') chacune prévue pour venir en contact avec une surface d'appui (101, 102 ; 101', 102') respective de la poutre (10, 11) de machine agricole, la première surface de contact (31 ; 31') du deuxième moyen d'appui (30' ; 30) étant orientée selon un premier plan directeur (P1 ; P1'), la deuxième surface de contact (32 ; 32') du deuxième moyen d'appui (30' ; 30) étant orientée selon un second plan directeur (P2 ; P2'), le premier plan directeur (P1 ; P1') étant sécant au deuxième plan directeur (P2 ; P2').

3. Structure d'accrochage d'outils selon l'une des revendications précédentes, le premier moyen d'appui (30 ; 30') étant configuré pour être maintenu en position par rapport à l'au moins un support (50 ; 50').

4. Structure d'accrochage d'outils selon l'une des revendications précédentes, configurée pour que le premier moyen d'appui (30 ; 30') et le deuxième moyen d'appui (30' ; 30) soient opposés l'un à l'autre de part et d'autre de la poutre en configuration de travail, préférentiellement selon une relation haut-bas.

5. Machine agricole comportant une poutre en H (10), au moins un outil agricole (19a; 19a') et un système de déplacement d'outils (7) ayant une structure d'accrochage d'outils (20) selon l'une des revendications précédentes, l'au moins un outil agricole étant fixé sur la poutre en H au moyen du système de déplacement d'outils, et la poutre en H (10) comportant préférentiellement deux surfaces d'appui (101, 102 ; 101', 102') convergentes correspondant respectivement aux deux surfaces de contact (31, 32 ; 31', 32') de l'au moins un des moyens d'appui (30, 30').

6. Machine agricole selon la revendication 5, dans laquelle l'au moins un moyen d'accrochage d'outil (40 ; 40') est un moyen arrière d'accrochage d'outil (40), et appartenant préférentiellement à un mécanisme déformable d'un outil agricole arrière (19a).

7. Machine agricole selon la revendication 5 ou 6, comportant un premier outil agricole (19a) qui est un élément semeur, et préférentiellement un deuxième outil (19a') qui est un enfouisseur d'engrais.

8. Machine agricole selon l'une des revendications 5 à 7, comportant deux structures d'accrochage d'outils (20) portant chacune un outil (19, 19', 19a, 19a') étant montées sur une section centrale (11).

## Patentansprüche

1. Werkzeugkupplungswerk, das so konfiguriert ist, dass es an einem Balken (10) einer landwirtschaftlichen Maschine (9) angebracht werden kann, mit:
- ein erstes Abstützmittel (30; 30') und ein zweites Abstützmittel (30'; 30),
- mindestens ein Werkzeugkupplungsmittel (40, 40'),
- mindestens einen Stützträger (50, 50'), der zum Tragen des ersten Abstützmittels (30; 30') bestimmt ist,
- mindestens ein Befestigungsmittel (60), das dazu bestimmt ist, das Halten des ersten Abstützmittels (30; 30') und des zweiten Abstützmittels (30'; 30) gegen den Balken (10) zu ermöglichen,
die Werkzeugkupplungswerk (20) eine Arbeitskonfiguration zulässt, in der die Werkzeugkupplungswerk (20) so konfiguriert ist, dass sie durch die Befestigungsmittel (60) an dem Balken (10) angebracht werden kann, die Kupplungswerk so konfiguriert ist, dass sie eine Translation in Bezug auf den Balken (10) von einer ersten Position in eine zweite Position durchlaufen kann, ohne dass das oder die Befestigungsmittel einen entspannten Zustand erreichen müssen, wobei die erste Position der ersten Arbeitskonfiguration entspricht, die zweite Position einer zweiten Arbeitskonfiguration entspricht, über begrenzte Kontakte (130; 140') auf ebenen Flächen (100; 100') des Balkens (10) und keine Kontakte auf mittleren Abschnitten (104; 104'), wobei
das erste Abstützmittel (30; 30') zwei Kontaktflächen (31, 32; 31', 32') aufweist, die jeweils dazu vorgesehen sind, mit einer jeweiligen Stützfläche (101, 102; 101', 102') des Balkens (10) der landwirtschaftlichen Maschine in Kontakt zu kommen, die erste Kontaktfläche (31) des ersten Abstützmittels (30; 30') entlang einer ersten Leitebene (P1; P1') ausgerichtet ist, die zweite Kontaktfläche (32) des ersten Abstützmittels (30; 30') entlang einer zweiten Leitebene (P2; P2') ausgerichtet ist, wobei die erste Leitebene (P1; P1') die zweite Leitebene (P2; P2') schneidet, und eine Kupplungsfläche (412; 412') des mindestens einen Werkzeugkupplungsmittels (40, 40') so konfiguriert ist, dass sie an einer Stützfläche (35; 36) des ersten Stützmittels angreift, wobei die Stützfläche (35 ; 36) der Kontaktfläche (31, 32; 31', 32') des mindestens einen Abstützmittels (30; 30') in einer Arbeitskonfiguration der Werkzeugkupplungswerk (20) gegenüberliegt, wobei die Struktur **dadurch gekennzeichnet ist, dass** die begrenzten Kontakte quasi-pünktlich sind.

2. Werkzeugkupplungswerk nach dem vorhergehenden Anspruch, wobei das zweite Abstützmittel (30'; 30) zwei Kontaktflächen (31, 32; 31', 32') aufweist, die jeweils dazu vorgesehen sind, mit einer jeweiligen Abstützfläche (101, 102; 101', 102') des Balkens (10, 11) einer landwirtschaftlichen Maschine in Kontakt zu kommen, wobei die erste Kontaktfläche (31; 31') des zweiten Abstützmittels (30'; 30) gemäß einer ersten Leitebene (P1; P1') ausgerichtet ist, die zweite Kontaktfläche (32; 32') des zweiten Abstützmittels (30'; 30) gemäß einer zweiten Leitebene (P2; P2') ausgerichtet ist, wobei die erste Leitebene (P1; P1') die zweite Leitebene (P2; P2') schneidet.

3. Werkzeugkupplungswerk nach einem der vorhergehenden Ansprüche, wobei das erste Abstützmittel (30; 30') so konfiguriert ist, dass es in Bezug auf den mindestens einen Stützträger (50; 50') in Position gehalten wird.

4. Werkzeugkupplungswerk nach einem der vorhergehenden Ansprüche, das so konfiguriert ist, dass das erste Abstützmittel (30; 30') und das zweite Abstützmittel (30'; 30) in der Arbeitskonfiguration auf beiden Seiten des Balkens einander gegenüberliegen, vorzugsweise gemäß einer Hoch-Tief-Beziehung.

5. Landwirtschaftliche Maschine mit einem H-Balken (10), mindestens einem landwirtschaftlichen Werkzeug (19a; 19a') und einem Werkzeugbewegungssystem (7) mit einer Werkzeugkupplungswerk (20) nach einem der vorhergehenden Ansprüche, wobei das mindestens eine landwirtschaftliche Werkzeug mittels des Werkzeugbewegungssystems an dem H-Balken befestigt ist und der H-Balken (10) vorzugsweise zwei konvergierenden Stützflächen (101, 102 ; 101', 102') aufweist, die jeweils den beiden Kontaktflächen (31, 32; 31', 32') des mindestens einen Abstützmittels (30, 30') entsprechen.

6. Landwirtschaftliche Maschine nach Anspruch 5, bei der das mindestens eine Werkzeugkupplungswerk (40; 40') ein hinteres Werkzeugkupplungswerk (40) ist und vorzugsweise zu einem verformbaren Mechanismus eines hinteren landwirtschaftlichen Werkzeugs (19a) gehört.

7. Landwirtschaftliche Maschine nach Anspruch 5 oder 6, mit einem ersten landwirtschaftlichen Werkzeug (19a), das ein Säelement ist, und vorzugsweise einem zweiten Werkzeug (19a'), das ein Düngervergraber ist.

8. Landwirtschaftliche Maschine nach einem der Ansprüche 5 bis 7, mit zwei Werkzeugkupplungswerke (20), die jeweils ein Werkzeug (19, 19', 19a, 19a') tragen, und die an einem Mittelabschnitt (11) angebracht sind.

## Claims

1. Tool-hitching structure designed to be mounted on a beam (10) of an agricultural machine (9), featuring:
- a first support means (30; 30') and a second support means (30'; 30),
- at least one tool-hitching means (40, 40'),
- at least one support (50, 50') designed to carry the first support means (30; 30'),
- at least one fastening means (60) designed to hold the first support means (30; 30') and the second support means (30'; 30) against the beam (10),
the tool-hitching structure (20) allowing a working configuration in which the tool-hitching structure (20) is configured to be mounted on said beam (10) by the fastening means (60), the hitching structure is configured to be translatable relative to the beam (10) from a first position to a second position, without the fastening means having to reach a released state, the first position corresponding to the first working configuration, the second position corresponding to a second working configuration, via limited contacts (130 ; 140') on flat faces (100; 100') of the beam (10) and the absence of contact on median parts (104; 104'), in which
the first support means (30; 30') has two contact surfaces (31, 32; 31', 32') each designed to come into contact with a respective support surface (101, 102; 101', 102') of the agricultural machine beam (10), the first contact surface (31) of the first support means (30 ; 30') being oriented in a first directional plane (P1; P1'), the second contact surface (32) of the first support means (30; 30') being oriented in a second directional plane (P2; P2'), the first directional plane (P1; P1') being secant to the second directional plane (P2; P2'), and one hitching surface (412; 412') of the at least one tool-hitching means (40; 40') is configured to engage against a support surface (35; 36) of the first support means, the support surface (35; 36) being opposite the contact surface (31, 32; 31', 32') of the at least one support means (30; 30') in a working configuration of the tool-hitching structure; 36) being opposite the contact surface (31, 32; 31', 32') of the at least one support means (30; 30') in a working configuration of the tool-hitching structure (20), **characterized in that** the limited contacts are quasi-punctual.

2. Tool-hitching structure according to the previous claim, the second support means (30'; 30) having two contact surfaces (31, 32; 31', 32') each designed to come into contact with a respective support surface (101, 102; 101', 102') of the agricultural machine beam (10, 11), the first contact surface (31 ; 31') of the second support means (30'; 30) being oriented in a first directional plane (P1; P1'), the second contact surface (32; 32') of the second support means (30'; 30) being oriented in a second directional plane (P2; P2'), the first directional plane (P1; P1') being secant to the second directional plane (P2; P2').

3. Tool-hitching structure according to one of the previous claims, the first support means (30; 30') being configured to be held in position relative to the at least one support (50; 50').

4. Tool-hitching structure according to one of the previous claims, designed so that the first support means (30; 30') and the second support means (30'; 30) are opposite each other on either side of the beam in the working configuration, preferably in an up-down relationship.

5. Agricultural machine featuring an H-beam (10), at least one agricultural tool (19a; 19a') and a tool-moving system (7) having a tool-hitching structure (20) according to one of the previous claims, the at least one agricultural tool being fixed to the H-beam by means of the tool-moving system, and the H-beam (10) preferably featuring two converging support surfaces (101, 102; 101', 102') corresponding respectively to the two contact surfaces (31, 32; 31', 32') of the at least one support means (30, 30').

6. Agricultural machine according to claim 5, wherein the at least one tool-hitching means (40; 40') is a rear tool-hitching means (40), and preferably belonging to a deformable mechanism of a rear agricultural tool (19a).

7. Agricultural machine according to claim 5 or 6, featuring a first agricultural tool (19a) which is a seeder element, and preferably a second tool (19a') which is a fertilizer burier element.

8. Agricultural machine according to one of claims 5 to 7, featuring two tool-hitching structures (20), each carrying a tool (19, 19', 19a, 19a'), mounted on a central section (11).
